# EUROPEAN PATENT SPECIFICATION

(11) **EP 1 491 795 B1**
(45) Date of publication and mention of the grant of the patent: **30.11.2005**
(21) Application number: 04014420.6
(22) Date of filing: 19.06.2004
(51) Int. Cl.: F16H 7/08, F01L 1/02

(54) **Tensioner**
Spanneinrichtung
Tendeur

(30) Priority: 25.06.2003 JP 2003181161
(43) Date of publication of application: 29.12.2004
(73) Proprietor: Tsubakimoto Chain Co., Osaka 530-0018, (JP)
(72) Inventor: Yoshida, Osamu, Kita-ku Osaka 530-0018 (JP); Hashimoto, Hiroshi, Kita-ku Osaka 530-0018 (JP); Nagao, Kenichi, Kita-ku Osaka 530-0018 (JP)
(74) Representative: Patentanwälte Hosenthien-Held und Dr. Held

(56) References cited:
- EP-A- 0 916 869
- US-A- 4 297 976
- US-A- 5 006 095
- US-B1- 6 234 928
- US-B1- 6 572 816
- US-B2- 6 478 703

## Description

This invention relates generally to a tensioner of the kind used for applying proper tension to a timing chain in an internal combustion engine of a vehicle. More particularly, the invention relates to improvements by which seizing between the plunger and the housing of a tensioner are avoided.

Transmissions utilizing chains and sprockets have been widely used for driving one or more camshafts from a crankshaft in an automobile engine. In this type of transmission, since the chain becomes elongated over time, a tensioner is used to apply an appropriate force to the slack side of the chain, to maintain proper tension therein and avoid vibration. In the tensioner, a spring-biased plunger projects from a tensioner housing, and the front end of the plunger typically presses against the back of a pivoted tensioner lever at a location remote from the pivot axis, causing a shoe on the front of the lever to be pressed into contact with the chain.

A graphite flake cast iron known as "gray cast iron", which usually exhibits excellent wear resistance, vibration absorption and machinability, has been widely used as the material for a tensioner housing.

To save weight however, instead of gray cast iron, the tensioner housing may be formed of aluminum, an aluminum alloy, or the like, preferably with a hard anodizing treatment so that a hard aluminum oxide surface layer is formed. Secondary electrolysis may also be carried out in a tetrathio-molybdenic acid ammonium solution in order to precipitate molybdenum disulfide in minute pits of the coating. This process, known by the trademark KASHIMA COAT, is described in Japanese patent No. 3226030, and results in improved resistance to seizing between the housing and the plunger.

Gray cast iron is not only heavy, but the crystals of graphite contained in the gray cast iron are long and thin. When force is applied to the tips of the crystals, cracks occur easily, and cause a reduction in the strength of the tensioner housing.

On the other hand, the KASHIMA COAT treatment requires complicated steps, which result in increased production costs. Furthermore, because it is difficult to produce the coating to a specified thickness, the KASHIMA COAT treatment is not applicable in the case of tensioner housings having close tolerances. When the tensioner housing has a complicated shape, or has small pits, uniform surface treatment cannot be carried out using the KASHIMA COAT process.

Many tensioners used in timing transmissions are ratchet-type tensioners, in which a pawl, pivotally supported on the tensioner housing, blocks retraction of the plunger by engaging ratchet teeth on a side of the plunger. When the plunger of a ratchet-type tensioner is pressed into the housing as a result of increased tension in the chain, a force is exerted on the sliding surfaces of the plunger and the plunger-receiving hole in the tensioner housing, on the side of the plunger opposite to the side on which the ratchet teeth are located. This force is exerted in a direction perpendicular to the direction of movement of the plunger, and increases frictional resistance of the plunger to movement along the direction of projecting and retracting movement. Because of the increased resistance to movement, vibration of the plunger, which occurs during operation of the engine, increases the temperatures of the tensioner housing and the plunger, and can cause seizing of the plunger, and resulting failure of the tensioner.

Intensive study of the above-described seizing phenomenon by the inventors of the present invention, including the analysis of the seized surfaces, has revealed details concerning the relationships between the cohesive adhesion force acting between the housing and the plunger, and the thrust force necessary for shearing the cohesive adhesion of the plunger.

Objects of the invention are to provide an improved tensioner having reduced weight and enhanced strength; to reduce the production cost of the tensioner; to prevent seizing in a tensioner having a complicated shape and close dimensional tolerances; and to provide a ratchet-type tensioner that is highly resistant to seizing and that has a long useful life.

The tensioner according to the invention comprises a tensioner housing with a plunger-accommodating hole, and a plunger slidably fitting in the plunger-accommodating hole. The plunger has a front end located outside the housing and is biased in a direction to project from the housing. The housing is formed of a hyper-eutectic aluminum-silicon (Al-Si) series alloy containing Si in the range from 14 to 16 weight %, and having a particle diameter of proeutectic Si in the range from 20 to 30 µm.

The above-described housing material is particularly advantageous in a tensioner in which a plunger spring biases the plunger in the projecting direction, the plunger has ratchet teeth formed on a side thereof, and the tensioner includes a pawl pivotally supported on the tensioner housing, the pawl being engaged with at least one of the ratchet teeth and thereby blocking the retraction of the plunger.

Since, in the tensioner constructed as described above, the tensioner housing is formed of a hyper-eutectic Al-Si series alloy, the tensioner is light in weight and does not need a heat treatment step in its production. Furthermore, since Si, which has a high melting point and high hardness, is present in the hyper-eutectic Al-Si series alloy uniformly and in minute form, the cohesive adhesion force between the tensioner housing and the plunger is suppressed to a level lower than the thrust force of the plunger, so that seizing between the plunger and the housing is prevented. The reason why the seizing is prevented is as follows.

Even if the surfaces of the tensioner and the plunger are smooth, when they are viewed microscopically, asperities are always present. As a result, where the tensioner housing and the plunger come into contact with each other, points known as "real contact points," where convex portions of the respective surfaces come into contact with each other, exist. When the plunger is vibrated, the contacting surfaces slide, and the temperature of the surfaces is increased. As a result, the convex portions of the "real contact points" are deformed. Not only is the contact surface area increased, but other convex portions come into contact with each other, so that the number of "real contact points" is increased.

When the cohesive adhesion force of the tensioner components, that is, the housing and the plunger, is greater than the thrust force of the plunger, adhesion of the plunger due to seizing occurs. On the other hand, in a housing in which a high hardness Si is minutely and uniformly dispersed, the cohesive adhesion force can be suppressed to a level lower than the thrust force of the plunger by increasing the contact of Si at the real contact points. The increased contact of Si at the real contact points suppresses wear, and prevents seizing due to adhesion of the plunger.

The invention will now be described in detail with reference to the accompanying drawings, in which:
- FIG. 1: is a cross-sectional view of a timing transmission utilizing a ratchet-type tensioner,
- FIG. 2: is a detailed cross-sectional view of the front-end portion of the tensioner of FIG. 1,
- FIG. 3: is a graph showing relationships between silicon particle diameters and seizing resistance, and
- FIG. 4: is a graph showing the results of seizing tests carried out on tensioners in accordance with the invention and on conventional tensioners.

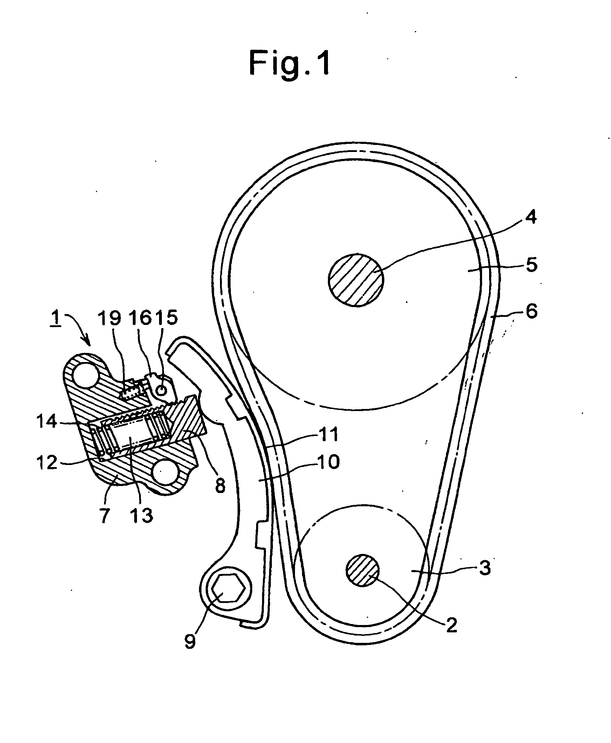

As shown in FIG. 1, a tensioner 1, which is attached to an engine (not shown), is arranged to apply tension to the slack side of a timing chain 6 trained around a driving sprocket 3 on the engine crankshaft 2 and a driven sprocket 5 on a camshaft 4.

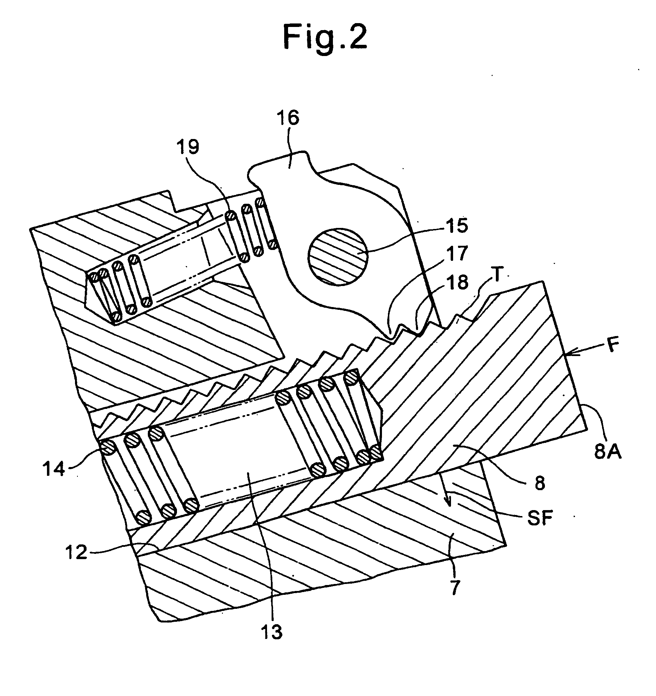

A retractable and extensible plunger 8 projects from the front of a tensioner housing 7, and the end surface 8A (FIG. 2) of the plunger engages the back of a tensioner lever 10, at a location remote from pivot shaft 9, on which the lever pivotally supported on the engine. The tensioner causes a shoe 11 on the opposite side of the lever 10 to be held in engagement with the slack side of the chain 6, allowing the chain to slide on the shoe while applying appropriate tension to the chain.

The plunger fits in a plunger-accommodating hole 12 in the tensioner housing. A hollow portion 13 of the plunger is open toward the bottom of the plunger accommodating-hole 12, and a spring 14 is disposed in compression between the closed end surface of the hollow portion 13 and the bottom of the plunger-accommodating hole 12. The spring 14 biases the plunger 8 in the projecting direction so that the tip of the plunger projects from the tensioner housing 7. This tensioner housing 7 is formed of a hyper-eutectic Al-Si series alloy containing Si in the range from 14 to 16 weight % and having a particle diameter of proeutectic Si of 20 to 30 µm.

A pawl 16 is pivotally supported on a shaft 15 which extends from the tensioner housing, and, as shown in FIG. 2, its teeth 17 and 18 engage ratchet teeth T formed on a side of the plunger 8.

A spring 19 urges the pawl 16 in a direction such that it rotates about shaft 15 into engagement with the ratchet teeth T on the plunger 8. The engagement between the ratchet teeth 17 and 18 and the ratchet teeth T blocks retracting movement of the plunger 8.

Seizing tests were performed on a ratchet type tensioner as shown in FIG. 2, under the following test conditions. Oil was supplied to the space defined by the hollow portion 13 of plunger 8 and the plunger-accommodating hole 12 of the tensioner housing, at an oil temperature of 80°C and an oil pressure of 0.30 MPa. Using a vibration testing machine, the end surface 8A of the plunger was caused to be displaced by a distance of ±0.1 mm at a rate of 200 times per second for 50,000 seconds (about 14 hours). That is, the plunger was cycled 1.0×10⁷ times in the vibration testing machine. Afterwards, the properties of the side surface of the plunger, which applied a side force SF (FIG. 2) to the wall of the plunger-accommodating hole 12, were observed, and the presence and absence of seizing were checked.

The above-mentioned tests were carried out on tensioners the housings of which were formed of a hyper-eutectic Al-Si series alloy having a Si content of 15 weight %. A tensioner having a housing in which the particle diameter of proeutectic Si was 5 µm or less, was designated "reference product 1". A tensioner having a housing in which the particle diameter of proeutectic Si was in the range of 20 to 30 µm is the product in accordance with the invention. A tensioner having a housing in which the particle diameter of proeutectic Si was in the range of 60 to 70 µm, was designated "reference product 2".

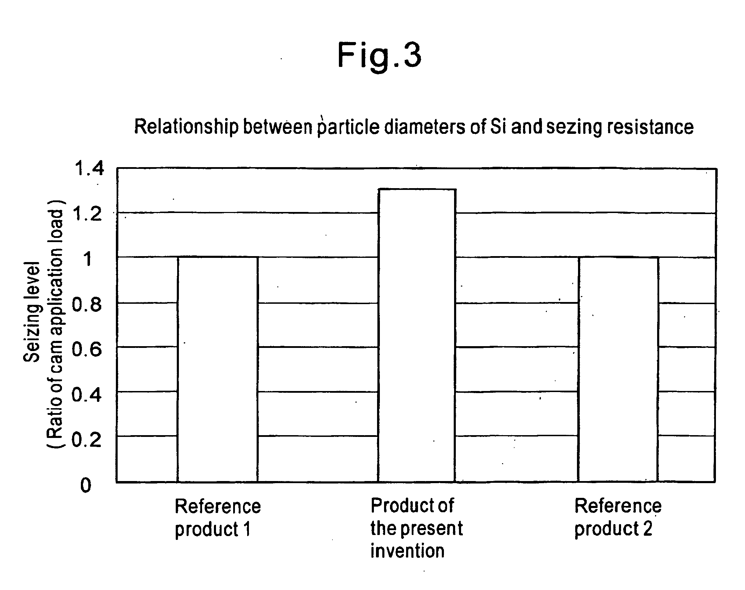

In the tests, predetermined cam application loads were applied, biasing the pawl into engagement with the ratchet teeth on the plunger. The cam application loads were applied without applying oil pressure to the plunger. A first predetermined cam application load was applied to the plunger through the pawl 16, and the plunger was vibrated 1.0×10⁷ times. If seizing was not observed after 1.0×10⁷ vibrations at a first set cam application load, the cam application load was increased step by step and the same vibrations steps were repeatedly carried out. FIG. 3 shows, for each of the three tensioners, the relative degree of cam application load at which the tensioner could function normally without seizing. Product 1 was used as a reference, its cam application load that resulted in seizing being set at 1. As apparent from FIG. 3, the reference product 1 and the reference product 2 exhibited the same level of performance. In contrast, the product of the invention, that is a tensioner in which the tensioner housing was formed of a hyper-eutectic Al-Si series alloy having a Si content of 15 weight %, and having a particle diameter of proeutectic Si in the range of 20 to 30 µm, functioned normally and did not generate seizing until the cam application load reached 1.3 times the cam application load that generated seizing in the reference products.

The particle diameter of the proeutectic Si can be controlled by controlling production conditions including melting point, casting temperature, and the like, during casting of the alloy. The particle diameter of proeutectic Si can also be controlled by the addition of very small quantities of Cr, Ti, Mg, and Fe. The Cr, in particular, improves the dispersion of proeutectic Si.

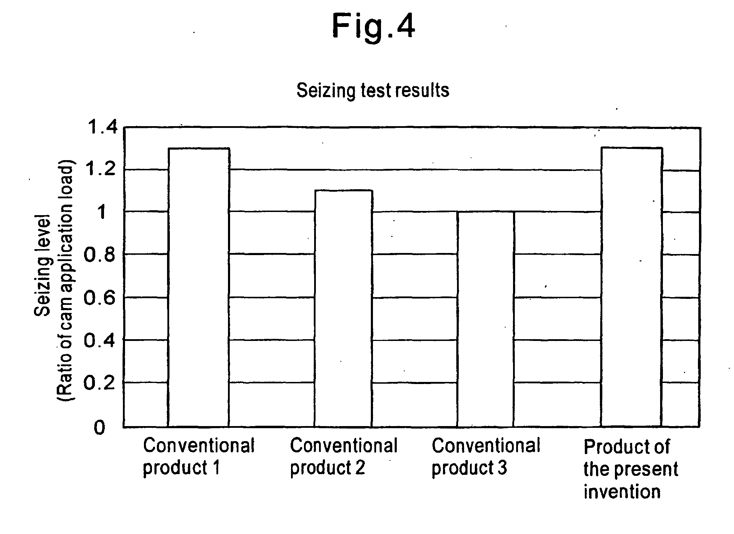

Results of the above-described tests, performed on conventional tensioners, are shown in FIG. 4 together with the results of tests on a tensioner in accordance with the invention. The test conditions and procedures were the same as described above. A conventional product 1 was a tensioner the housing of which was formed of a usual Al-Si eutectic alloy (ADC 12) and subjected to the KASHIMA COAT process. The conventional product 2 was a tensioner in which the housing was formed of a gray cast iron (FC 200). The conventional product 3 was a tensioner in which the housing was formed of a usual Al-Si eutectic alloy. As in FIG. 3, the graph of FIG. 4 depicts the maximum relative cam application load at which normal operation without seizing can take place. The seizing level was determined using with the conventional product 3 as a reference. As apparent from the results depicted in FIG. 4, the product of the invention, without being subjected to special surface treatment, exhibited superior resistance to seizing compared to the tensioners formed of conventional materials, i.e. conventional products 2 and 3, and exhibited the same seizing resistance as the conventional product 1, in which an Al-Si eutectic alloy (ADC 12) was subjected to the KASHIMA COAT process.

Since in the tensioner constructed as described above, the tensioner housing is formed of a hyper-eutectic Al-Si series alloy containing Si in the range from 14 to 16 weight % and having a particle diameter of proeutectic Si in the range from 20 to 30 µm, it has a weight significantly less than that of a conventional tensioner. Moreover, it can be produced without a heat treatment step. Consequently, the tensioner of the invention contributes to an improvement in fuel efficiency of an automobile and also to cost reduction.

Since Si, having high melting point and high hardness, exists in the hyper-eutectic Al-Si series alloy uniformly and in minute form, seizing between the tensioner housing and the plunger is suppressed.

The improved wear resistance and endurance realized with the invention are especially advantageous in a ratchet type tensioner, in which the ratchet exerts a force biasing the plunger to the side. Furthermore, since the tensioner in accordance with the invention does not require surface treatment, the simplification of production and reduction of production cost are particularly significant in a ratchet type tensioner, which typically has a relatively complicated construction.

### REFERENCE NUMBERS

- 1: tensioner
- 2: crankshaft
- 3: driving sprocket
- 4: camshaft
- 5: driven sprocket
- 6: timing chain
- 7: housing
- 8: plunger
- 8A: end surface
- 9: pivot shaft
- 10: lever
- 11: shoe
- 12: plunger-accommodating hole
- 13: hollow portion
- 14: spring
- 15: shaft
- 16: pawl
- 17, 18: teeth
- 19: spring

- SF: side force
- T: ratchet teeth

## Claims

1. Tensioner comprising a tensioner housing with a plunger-accommodating hole, and a plunger slidably fitting in said plunger-accommodating hole, the plunger having a front end located outside the housing and being biased in a direction to project from the housing, **characterized in that** the housing is formed of a hyper-eutectic Al-Si series alloy containing Si in the range from 14 to 16 weight %, and having a particle diameter of proeutectic Si in the range from 20 to 30 µm.

2. Tensioner according to claim 1, including a plunger spring biasing said plunger in the projecting direction, in which the plunger has ratchet teeth formed on a side thereof, and including a pawl pivotally supported on the tensioner housing, the pawl being engaged with at least one of the ratchet teeth and thereby blocking the retraction of the plunger.

3. Tensioner according to claim 1 or 2, **characterized in that** the hyper-eutectic Al-Si series alloy contains very small quantities of Cr, Ti, Mg, and/or Fe.

## Patentansprüche

1. Spanner aufweisend ein Spannergehäuse mit einer Plungerkolben-Aufnahmeöffnung und einem Plungerkolben, der verschiebbar in die besagte Plungerkolben-Aufnahmeöffnung eingepasst ist, wobei der Plungerkolben ein vorderes Ende aufweist, das außerhalb des Gehäuses angeordnet ist, und in eine Richtung vorgespannt ist, um über das Gehäuse vorzustehen, **dadurch gekennzeichnet, dass** das Gehäuse aus einer hyper-eutektischen Legierung der Al-Si-Reihe geformt ist, die Si in einem Bereich von 14 bis 16 Gew.-% enthält, und einen Partikeldurchmesser von proeutektischem Si in dem Bereich von 20 bis 30 µm hat.

2. Spanner nach Anspruch 1, aufweisend eine Plungerkolbenfeder, die besagten Plungerkolben in Ausfahrrichtung vorspannt, wobei der Plungerkolben Sperrzähne hat, die auf einer Seite desselben ausgebildet sind, und eine Sperrklinke umfasst, die verschwenkbar am Spannergehäuse gelagert ist, wobei die Sperrklinke in Eingriff mit mindestens einem der Sperrzähne ist und **dadurch** das Einfahren des Plungerkolbens blockiert.

3. Spanner nach einem der Ansprüche 1 oder 2, **dadurch gekennzeichnet, dass** die hyper-eutektische Legierung der Al-Si-Reihe sehr geringe Mengen an Cr, Ti, Mg und/oder Fe enthält.

## Revendications

1. Tendeur comprenant un carter de tendeur muni d'un trou destiné à accueillir un piston, et un piston coulissant dans ledit trou d'accueil du piston, le piston ayant une extrémité située à l'extérieur du carter et étant chargé dans une direction de manière à dépasser du carter, **caractérisé en ce que** le carter est fait d'un alliage hyper-eutectique de la série des Al-Si contenant Si dans une proportion de 14 à 16 % en masse, et ayant un diamètre de particule de Si proeutectique de l'ordre de 20 à 30 µm.

2. Tendeur selon la revendication 1, comprenant un ressort de tendeur chargeant ledit piston dans la direction de saillie, où le piston comporte des dents de cliquet sur un de ses côtés, et incluant un doigt d'encliquetage monté sur le carter de manière à pouvoir pivoter, le doigt d'encliquetage étant engagé au moins avec une des dents de cliquet et bloquant ainsi la rétractation du piston.

3. Tendeur selon la revendication 1 ou 2, **caractérisé en ce que** l'alliage hyper-eutectique de la série des Al-Si contient de très petites quantités de Cr, Ti, Mg et/ou Fe.
